# EUROPEAN PATENT APPLICATION

(11) **EP 2 784 751 A2**
(43) Date of publication of application: **01.10.2014**
(21) Application number: 14152411.6
(22) Date of filing: 24.01.2014
(51) Int. Cl.: G06T 13/40

(54) **Display device and method to display dance video**

(30) Priority: 25.03.2013 KR 20130031702
(71) Applicant: Samsung Electronics Co., Ltd, Gyeonggi-do 443-742 (KR)
(72) Inventor: Park, Sang-young, Daegu (KR); Lee, Jin-sung, Gyeonggi-do (KR); Jung, Kil-soo, Gyeonggi-do (KR)
(74) Representative: Instone, Terry

(57) **Abstract**

A display device includes: an input unit configured to receive a content selection command; a storage unit configured to store an image of a user; a controller configured to extract skeleton information of the user from the user image, search for data of an action of an actor related to a content selected by the content selection command, and extract skeleton information of the actor from an image of the actor included in the searched action data; and a display unit, wherein the controller is further configured to generate new action data including the actor image replaced with the user image by mapping the user skeleton information on the actor skeleton information, and control the display unit to display the new action data.

## Description

### BACKGROUND

### 1. Field

Apparatuses and methods consistent with exemplary embodiments relate to a display device and method to display a dance video, and more particularly to a display device to display a dance video in which user images are mapped and a display method thereof.

### 2. Description of the Related Art

Recently, communication technology is advancing, and a variety of display devices are being developed. As user's interest in a field of cultural contents is heightened, users have a lot of opportunities to be easily able to access cultural contents by using a variety of display devices. For example, the cultural contents may be music, film, music video, and so on. The users are not satisfied with simply listening to music and watching a dance of a singer, and thus, sometimes copy the dance of the singer or shoot a video in which the user copies the dance of the singer and upload the video to a server.

Also, the user may want to see a video in which a singer performing dance actions is replaced by the user's appearance and to know how similar his or her dance actions are to the dance actions of the singer.

In order to meet such needs, a lot of technology to create composite images by using virtual characters has emerged. However, in many cases, the technology simply replaces only a face image. Also, technology to compare a user's dance action and a singer's dance action has emerged. However, since the technology requires a number of cameras and markers, etc., it is difficult for average users to easily use the technology. Accordingly, technology by which average users can easily create a video in which a singer is replaced with the user's own image and determine how similar a user's dance action is to a singer's dance action has been required.

### SUMMARY

According to the present invention there is provided an apparatus and method as set forth in the appended claims. Other features of the invention will be apparent from the dependent claims, and the description which follows.

One or more exemplary embodiments may or may not overcome the above drawbacks and other problems associated with the related art. One or more exemplary embodiments provide a display device and method that can generate a dance video replaced with a user's image and display information for dance action correction.

One or more exemplary embodiments is directed to a display device, which may include: an input unit configured to receive a content selection command; a storage unit configured to store an image of a user; a controller configured to extract skeleton information of the user from the user image, search for data of an action of an actor related to a content selected by the content selection command, and extract skeleton information of the actor from an image of the actor included in the searched action data; and a display unit, wherein the controller is further configured to generate new action data including the actor image replaced with the user image by mapping the user skeleton information on the actor skeleton information, and control the display unit to display the new action data.

Each of the user skeleton information and the actor skeleton information may include at least one feature point, and the controller may map the feature point in the user image and the feature point in the actor image to generate the new action data.

The display device may include a communication unit to receive at least one of the selected content and the searched action data related to the selected content from a server apparatus.

The storage unit may further store an action video of the user corresponding to the action of the actor contained in the searched action data. The controller may extract the user skeleton information from the user image in the action video, extract the actor skeleton information from the actor image in the searched action data, and generate information for correcting an action of the user in the action video by comparing the user skeleton information and the actor skeleton information. The display unit may display the information for correcting the action of the user.

The information for correcting the action of the user may be generated if a difference between an action of the user in the action video and the action of the actor in the action data exceeds a pre-set difference value.

The controller may map a user skeleton, included in the user skeleton information, on an actor skeleton included in the actor skeleton information, extract a user skeleton depth, included in the user skeleton information, from the user image in the action video, extract an actor skeleton depth, included in the actor skeleton information, from an action image in the searched action data, and map texture information of the user skeleton on the actor image by using the user skeleton depth and the actor skeleton depth. The information for correcting the action of the user may be a video in which an image of the action of the user changes into an image of the action of the actor.

The information for correcting the action of the user may include an overlapping video of a slow motion, an overlapping video of separate actions, and a stopped overlapping video, in which an image of the action of the user and an image of the action of the actor are overlapped.

The information for correcting the action of the user may include a video which repeatedly playbacks an interval in which the difference exists between the action of the user in the action video and the corresponding action in the searched action data.

One or more exemplary embodiments is directed to a server apparatus which may include: a server communication unit configured to receive content information from a display device; and a server controller configured to search action data related to the received content information, wherein the server controller is further configured extract actor skeleton information from an actor image in the searched action data, and control the server communication unit to transmit the actor skeleton information to the display device.

One or more exemplary embodiments is directed to a dance video display method which may include: receiving a content selection command; searching for data of an action of an actor related to a content selected by the content selection command; extracting skeleton information of the user from an image of a user and skeleton information of the actor from an image of the actor included in the searched action data; generating new action data including the actor image replaced with the user image by mapping the user skeleton information on the actor skeleton information; and displaying the new action data.

Each of the user skeleton information and the actor skeleton information may include at least one feature point, and the generating the action data may include mapping the feature point in the user image and the feature point in the actor image to generate the new action data.

The dance video display method may include receiving at least one of the selected content and the searched action data related to the selected content from a server apparatus.

The dance video display method may further include: extracting the actor skeleton information from the actor image in the searched action data related to a piece of content selected by the content selection command and the user skeleton information from the user image in an action video of the user corresponding to the action of the actor included in the searched action data; and generating and displaying information for correcting an action of the user in the action video by comparing the user skeleton information and the actor skeleton information.

The information for correcting the action of the user may be generated if a difference between an action of the user in the action video and the action of the actor in the action data exceeds a pre-set difference value.

The dance video display method may further include: mapping a user skeleton, included in the user skeleton information, on the actor skeleton; extracting a user skeleton depth, included in the user skeleton information, from the user image in the action video; extracting an actor skeleton depth, included in the actor skeleton information, from an action image in the searched action data; and mapping texture information of the user skeleton on the actor image by using the user skeleton depth and the actor skeleton depth, wherein the information for correcting the action of the user is a video in which an image of the action of the user changes into an image of the action of the actor.

The information for correcting the action of the user may include an overlapping video of a slow motion, an overlapping video of separate actions, and a stopped overlapping video, in which an image of the action of the user and an image of the action of the actor are overlapped.

The information for correcting the action of the user may include a video which repeatedly playbacks an interval in which the difference exists between the action of the user in the action video and the corresponding action in the searched action data.

According to a variety of exemplary embodiments, action data replaced with a user's own image may easily be generated, and an action video of a user may be easily compared to an action video of an actor.

Other objects, advantages and salient features will become apparent from the following detailed description, which, taken in conjunction with the annexed drawings, discloses preferred embodiments.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 is a view illustrating a configuration of a system including a server apparatus and a display device according to an exemplary embodiment;
FIG. 2 is a block diagram of a display device according to an exemplary embodiment;
FIG. 3 is a block diagram of a server apparatus according to an exemplary embodiment;
FIG. 4 is a view for explaining a process of extracting a skeleton from an image according to an exemplary embodiment;
FIG. 5 is a view for explaining a process of extracting a skeleton from a face image according to an exemplary embodiment;
FIG. 6 is a view for explaining a process of extracting 3D image information by using a skeleton depth according to an exemplary embodiment;
FIG. 7 is a view for explaining a process of extracting skeletons from music-related dance data according to an exemplary embodiment;
FIG. 8 is a view for explaining a dance datum replaced with a user image according to an exemplary embodiment;
FIG. 9 is a view for explaining a process of generating information for dance action correction according to an exemplary embodiment;
FIG. 10 is a view for explaining information for dance action correction according to an exemplary embodiment;
FIG. 11 is a view for explaining information for dance action correction according to another exemplary embodiment;
FIG. 12 is a flowchart for explaining a display method of a dance video replaced with user images according to an exemplary embodiment; and
FIG. 13 is a flowchart for explaining a dance video display method of displaying information for dance action correction according to an exemplary embodiment.

Throughout the drawings, like reference numerals will be understood to refer to like parts, components and structures.

### DETAILED DESCRIPTION OF THE EXEMPLARY EMBODIMENTS

Hereinafter, certain exemplary embodiments of the inventive concept will be described in detail with reference to the accompanying drawings.

The matters defined herein, such as a detailed construction and elements thereof, are provided to assist in a comprehensive understanding of this description. Thus, it is apparent that exemplary embodiments may be carried out without those defined matters. Also, terms that will be described later in the present disclosure are defined by considering functions in the present inventive concept, and may vary depending on an operator's or user's intention or practice. Therefore, the definition of the terms will be made based on information throughout this disclosure.

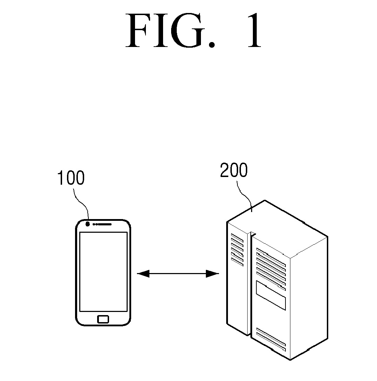

FIG. 1 is a view illustrating a configuration of a system including a server apparatus and a display device according to an exemplary embodiment. A dance video display system includes a display device 100 and a server apparatus 200. In order to display a dance video, music or dance data associated with the music is required. The display device 100 may store the music. Also, the display device 100 may search the music in the server apparatus 200, and then download the music from the server apparatus 200. For example, a user may search music by inputting a music name, a singer name, a composer name, a lyricist name or the like into the display device 100, and then select the music from a searched result. Alternatively, the display device 100 may receive audio data of music being outputted from the outside, and then sends a search request to the server apparatus 200. Also, the display device 100 may store dance data. Alternatively, the display device 100 may download the dance data from the server apparatus 200. A search process of the dance data is the same as the search process of the music.

For example, the display device 100 may be a digital photo frame, a cell phone, a personal digital assistant (PDA), an MPEG-2 Audio Layer III (MP3) player, a television (TV), a navigation, etc.

The server apparatus 200 may search the music or music-related dance data requested from the display device 100, and then transmit a searched result to the display device 100. The server apparatus 200 may store and search music or dance data in itself. Alternatively, a music server apparatus or a dance data server apparatus may be configured separately from the server apparatus 200 that communicates with the display device 100. The server apparatus 200 may receive a search command or request from the display device 100, and then may search in the separate music server apparatus or dance data server apparatus. The server apparatus 200 transmits the search result to the display device 100.

In order to display a dance video, a skeleton and a skeleton depth may be extracted from the images or the dance data. The skeleton means that feature points are extracted from an image and connected to one another by straight lines. The user is a three-dimensional (3D) form, but an image of the user is a planar form in a two dimension (2D). Accordingly, the skeleton depth may be used to form a complete user form. The skeleton depth is used to predict a 3D shape by using distances between feature points of a skeleton, etc. The skeleton and skeleton depth may be extracted from the display device 100 or the server apparatus 200.

First, a case in which the skeleton and the skeleton depth are extracted from the display device 100 will be explained. The display device 100 having a camera (not illustrated) may capture an image of a user and store the captured image. The display device 100 may also store a pre-captured image of the user in an inner or external memory. The display device 100 extracts skeletons and skeleton depths from at least one of the stored image of the user and a dancer image within the dance data. The display device 100 may generate dance data including a dancer image replaced with the stored user image by using the extracted skeletons and skeleton depths.

The case that the skeleton and the skeleton depth are extracted from the server apparatus 200 is similar to the above description. A detailed method for generating the dance data will be explained later. First, configurations of the display device 100 and the server apparatus 200 will be explained.

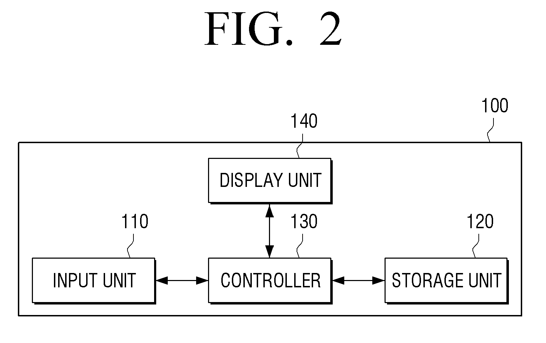

FIG. 2 is a block diagram of a display device according to an exemplary embodiment. Referring to FIG. 2, the display device 100 includes an input unit 110, a storage unit 120, a controller 130, and a display unit 140.

The input unit 110 receives a music selection command from the user. Then, the input unit 110 may receive a variety of user commands. For example, the input unit 110 may receive at least one search word for searching music, a user image selection command, a dance data generating command for generating dance data including a dancer image replaced with a user image, an information generating command for dance action correction, etc. In some cases, the input unit 110 may receive audio data being outputting from the outside. The input unit 110 may be implemented as a touch screen to allow a touch input, a key pad, a microphone, etc.

The storage unit 120 may store the user image, searched music, or music-related dance data. The storage unit 120 may store a dance video of the user who copies or follows actions of a dancer contained within the dance data, dance data generated to include dancer images replaced with the user images, information for correcting the generated dance action, etc. The storage unit 120 may include a read-only memory (ROM), a random access memory (RAM), a memory card (e.g. a secure digital (SD) card, a memory stick, etc.) which can be separated from or mounted to the display unit 140. Also, the storage unit 120 may include a non-volatile memory, a volatile memory, a hard disk drive (HDD), or a solid state drive (SSD).

The controller 130 may search dance data related to selected music. The controller 130 extracts a user skeleton and a user skeleton depth from the user image, and extracts a dancer skeleton and a dancer skeleton depth from a dancer image within the searched dance data. The controller 130 generates dancer data including a dancer image replaced with the user image by mapping the user skeleton on the dancer skeleton, and mapping user skeleton texture information on the dancer image by using the user skeleton depth and the dancer skeleton depth. Each of the user skeleton and dancer skeleton may include feature points of a face image of each of the user and the dancer. The controller 130 may maps the feature points of the face image of the user image and the feature points of the face image of the dancer image.

Additionally, the controller 130 may extract a user skeleton from a dance video of the user who copies actions of the dancer, and a dancer skeleton from the music-related dance data. The controller 130 compares the extracted user skeleton and dancer skeleton, and then generates information for correcting a dance action.

The display unit 140 displays the dance data replaced with the user image. The display unit 140 displays the information for correcting the generated dance action. The display unit 140 may be implemented as a variety of display units such as a liquid crystal display panel (LCD panel), a plasma display panel (PDP), an organic light emitting diode (OLED), a vacuum fluorescent display (VFD), a field emission display (FED), an electro-luminescence display (ELD), etc.

The display unit 140 may be implemented by a normal display panel without a touch input function, or a touch display panel which may recognize user operations by using at least one proximity sensor or touch sensor. If the display unit 140 is implemented by the touch display panel, the display unit 140 may receive at least one touch gesture through a user's body (e.g. fingers including a thumb) or a detectable input means (e.g. a stylus pen).

The display device 100 may further include a communication unit (not illustrated) or a photographing unit (not illustrated). The communication unit may request a search for music or music-related dance data to the server apparatus 200, and receive searched music or dance data from the server apparatus 200. In some cases, the communication unit may receive information of dancer skeletons and dancer skeleton depths extracted from the dance data from the server apparatus 200.

The photographing unit may photograph or capture a user image or actions of the user copying dance actions of a dancer. The photographed or captured images or dance actions may be stored in the storage unit 120.

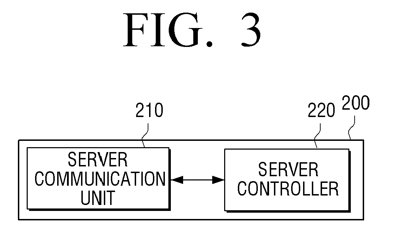

FIG. 3 is a block diagram of a server apparatus according to an exemplary embodiment. Referring to FIG. 3, the server apparatus 200 includes a server communication unit 210 and a server controller 220.

The server communication unit 210 receives a search request for music or music-related dance data or music information for searching for the music or the music-related dance data.

The server controller 220 searches dance data related to the received music information. The server controller 220 also may search the music. The server apparatus 200 may store the music or dance data. In this case, the server controller 220 searches for the music or dance data stored in the server apparatus 200. Alternatively, the music or dance data may be stored in a separate server apparatus. The music may exist in a music search server apparatus, and the dance data may exist in a dance search server apparatus. Alternatively, the music and dance data may exist in another server apparatus separate from the server apparatus 200. In the above-description, the server controller 220 may control the server communication unit 210 to request a search for music or dance data to the separate server apparatus. The searched music or dance data may completely match the search information. However, if there is not completely matched music or dance data, the most similar music or dance data may be searched for. The server communication unit 210 sends the searched music or dance data to the display device 100.

In some cases, the server controller 220 extracts a dancer skeleton and a dancer skeleton depth from a dancer image within the searched dance data. The dancer skeleton and dancer skeleton depth may be extracted from the display device 100 or the server apparatus 200. In other words, the display device 100 receives the dance data from the server apparatus 200, and then may extract a dancer skeleton and a dancer skeleton depth from a dance image of the received dance data. Also, the server apparatus 200 may extract a dancer skeleton and a dancer skeleton depth from a dancer image of the searched dance data. In this case, the server apparatus 200 may send the extracted dancer skeleton and dancer skeleton depth to the display device 100.

So far, the configuration of the display device 100 and server apparatus 200 has been described. A process of extracting the skeleton will be explained hereinafter.

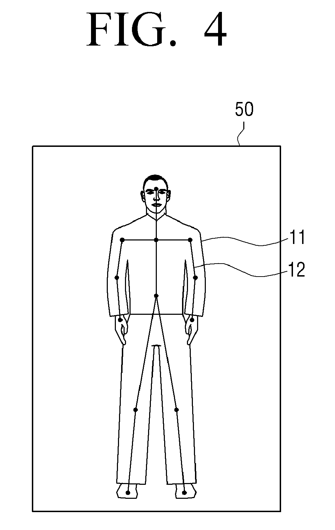

FIG. 4 is a view for explaining a process of extracting a skeleton from an image according to an exemplary embodiment.

FIG. 4 illustrates a user image 50. The user image 50 may be a still image. FIG. 4 illustrates both a user shape 11 and an extracted user skeleton 12. The controller 130 recognizes a face, shoulders, elbows, hands, a waist, knees, and feet from the user shape 11. As illustrated in FIG. 4, the controller 130 extracts feature points with respect to the face, both shoulders, a chest, both elbows, both hands, the waist, both knees, and both feet. Accordingly, the user skeleton 12 may be generated by connecting the feature points extracted from the user shape 11. As described above, the server apparatus 200 may extract the skeleton. In this case, the server controller 220 generates the user skeleton 12 from the user shape 11.

In general, the skeleton may be generated by recognizing many markers attached on a lot of portions of a user and extracting the recognized markers as feature points. Since this case needs a lot of equipment, it is difficult to use it. However, in the exemplary embodiment, the feature points may be extracted by processing the user shape 11 within the user image 50 by an image processing method, and thus the skeleton may easily be generated.

The feature points extracted from the user shape 11 as described above is only an exemplary embodiment. In addition, a more detailed skeleton may be generated by extracting more feature points.

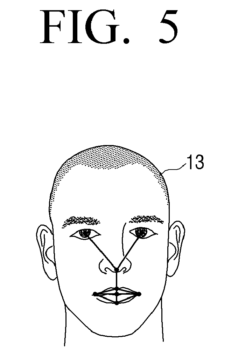

FIG. 5 is a view for explaining a process of extracting a skeleton from a face image according to an exemplary embodiment.

FIG. 5 illustrates an image of a user face 13. The controller 130 recognizes eyes, a nose, a mouse, etc. within the user face 13. As illustrated in FIG. 5, the controller 130 extracts feature points with respect to eyes, a nose, an upper lip center, a lower lip center, both ends of lips, and a center of a contact portion between the upper and lower lips. Accordingly, a user face skeleton may be generated by connecting the feature points extracted from the user face 13. If the user face skeleton extracted from the user image is mapped on a dancer face skeleton within the dance data, it is possible to express changes of a user facial expression in response to changes of a dancer facial expression. The feature points extracted from the user face 13 as described above are only an exemplary embodiment. In addition, a more detailed face skeleton may be generated by extracting more feature points. Since changes in the facial expression are generally done by movement of the lips, eyes or eyebrows, a lot of feature points may be extracted from the lips, eyes or eyebrows portions.

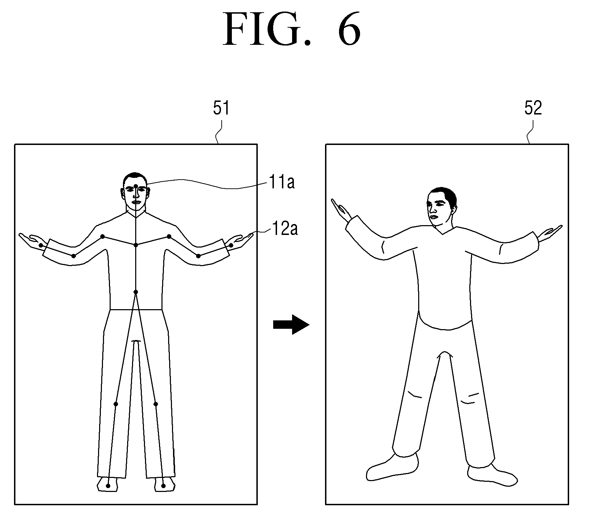

FIG. 6 is a view for explaining a process of extracting 3D image information by using a skeleton depth according to an exemplary embodiment.

FIG. 6 illustrates a user image 51. FIG. 6 illustrates both a user shape 11a and an extracted user skeleton 12a. A method of generating the user skeleton 12a by extracting feature points from the user shape 11a was described with reference to FIG. 4. Therefore, a description thereof will be omitted.

A user image or a dancer image within dance data is a 2D image. Accordingly, there are parts that are not represented on the image. In addition, if only skeleton is extracted, an action having a 3D difference also may be extracted as a similar skeleton. For example, an image in which a user looks at the front is assumed. In this case, a back side of the user is not represented on the image, and data for the back side of the user do not exist. Accordingly, if a skeleton is extracted from the image in which the user looks at the front and a user texture is mapped, when the data of back side of the user is needed, an unnatural user shape may be produced.

Accordingly, 3D image information is extracted by using a skeleton depth. According to an exemplary embodiment, the skeleton depth may be extracted by using the feature points and segment lengths between the feature points. The skeleton depth may be extracted by using the feature points and positions, directions, and their relationships of segments between the feature points. Since such method analyzes only key parameters, the processing speed is fast and a certain pattern matching may be performed.

Information for a 3D user shape 52 may be extracted from the planar user image 51 by using the skeleton extracted from the user image, the texture of the user image, and the skeleton depth. The extracted information for the 3D user shape 52 may be used to generate a natural shape when the dancer image within the dance data is mapped by the user image. To extract the 3D shape information from the skeleton is called as extraction of the skeleton depth.

Dance data including dancer images replaced with user images may be generated by using the skeletons and skeleton depths extracted from the user images.

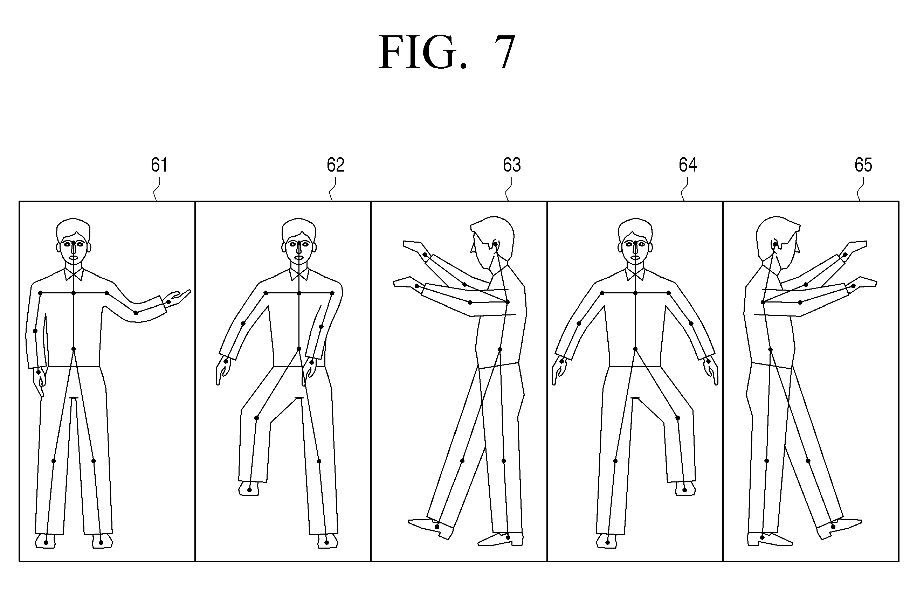

FIG. 7 is a view for explaining a process of extracting skeletons from music-related dance data according to an exemplary embodiment.

Referring to FIG. 7, the dance data includes frames 61, 62, 63, 64, and 65 in which a dancer performs dance actions. According to an exemplary embodiment, a skeleton may be extracted from each of the frames. For example, the controller 130 recognizes a face, both shoulders, a chest, both elbows, both hands, a waist, both knees, and both feet of a dancer shape which exists in each of the frames, and then extracts feature points. A skeleton is generated by connecting the extracted feature points.

Alternatively, the controller 130 may generate a skeleton by extracting feature points from a representative frame. Skeletons for the rest of the frames may be generated by matching the generated skeleton with the frames and transforming the skeleton. For example, a skeleton may be generated from a first frame 61 by the above-described method. Changed locations of the feature points in a second frame 62 are analyzed. It is analyzed in the second frame 62 that feature points of the left arm and right leg have largely changed. Data of a skeleton for the second frame 62 may be obtained by transforming the generated skeleton with the analyzed changed locations of the feature points. To obtain data of a skeleton means to generate a new skeleton or to store only changed data of the feature points.

The dancer skeleton depth may be extracted by the method described with reference to FIG. 6.

Dance data in which a dancer image is replaced with a user image may be generated by using user skeletons and user skeleton depths extracted from the user image and dancer skeletons and dancer skeleton depths extracted from the dancer image within the dance data.

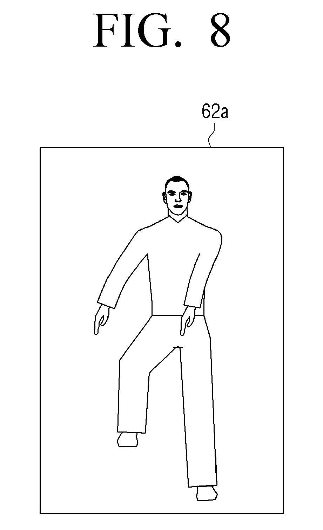

FIG. 8 is a view for explaining a dance datum replaced with a user image according to an exemplary embodiment.

FIG. 8 illustrates a frame 62a of dance data in which a dancer image is replaced with a user image. A user skeleton is mapped with a dancer skeleton within the frame. The mapping of the skeletons may be performed in such a way as to match the feature points.

Texture information of the user skeleton is mapped on the dancer image by using the user skeleton depth and the dancer skeleton depth. According to an exemplary embodiment, lengths, locations, directions, and their relationships of the segments between the feature points are analyzed depending on changes in the positions of the feature points of the user skeleton. Depending on an analysis result, the information of the extracted 3D user shape is modified, and then the modified information of the user shape is mapped on the information of the extracted 3D dancer shape. That the information of the 3D user shape is mapped on the information of the 3D dancer shape means that the dancer shape is naturally replaced with the texture of the user shape.

In other words, the display device 100 maps the user skeleton on the dancer skeleton, and maps the texture information of the user skeleton on the dancer image by using the user skeleton depth and the dancer skeleton depth. Through this process, the frame 62a of the dance data including the dancer image replaced with the user image may be generated. The display device 100 may perform the above-described process with respect to each of the plurality of frames, and then continuously display the plurality of frames, thereby displaying a dance video replaced with the user image.

The display device 100 may generate not only the dance video replaced with the user image, but also information for dance action correction.

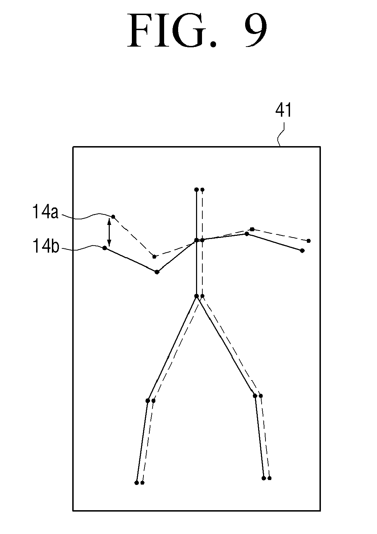

FIG. 9 is a view for explaining a process of generating information for dance action correction according to an exemplary embodiment.

Referring to FIG. 9, a frame 41 is described as an example. The frame 41 as illustrated in FIG. 9 shows only the extracted user skeleton 14a and dancer skeleton 14b. The user may generate and save a dance video of the user who copies the actions of the dancer included in the dance data. The dance video may be generated by using an external camcorder, etc., and then may be transmitted to the display device 100 by using a wire or wireless communication method. Also, the dance video may be stored in the display device 100 by using a removable storage device. In some cases, the user may generate and save a dance video by using a photographing unit (not illustrated) included in the display device 100.

The display device 100 compares and analyzes the dance data and the generated dance video. Comparison of the dance data and the generated dance video may be performed according to each of the frames. The comparison of the dance data and the generated dance video may be performed by a way of comparing the extracted user skeleton 14a and the dancer skeleton 14b. Comparison of the skeletons may be performed by a way of comparing feature points of the user skeleton 14a and corresponding feature points of the dancer skeleton 14b.

The display device 100 may set a part of which a skeleton will be compared or an amount of difference in an action required to generate dance action correction information. For example, if the comparing part is set as the whole part, the display device 100 generates the dance action correction information when a pre-set difference occurs in at least one of the entire feature points. If the comparing part is set as an upper body part, the display device 100 may generate the dance action correction information when the pre-set difference occurs in at least one of feature points of hands, elbows, and shoulders. The comparing part may be set as hands, feet, etc. The above-described set values may be selected by the user.

Also, the pre-set difference for generating the dance action correction information may be set as a certain value, or angle. For example, it may be set as conditions such as a feature point of a hand differs by 30 cm or more in an actual distance, and an angle of an elbow differs by 30 degrees or more in an actual angle. In FIG. 9, a feature point of a right hand of the user skeleton is placed at a position which is a certain distance higher than a feature point of a right hand of the dancer skeleton, and the difference value between the feature points exceeds a pre-set difference value. Accordingly, information for the dance action correction is generated with respect to the frame 41 of the dance video.

The information for correcting the dance action may be generated by a variety of ways.

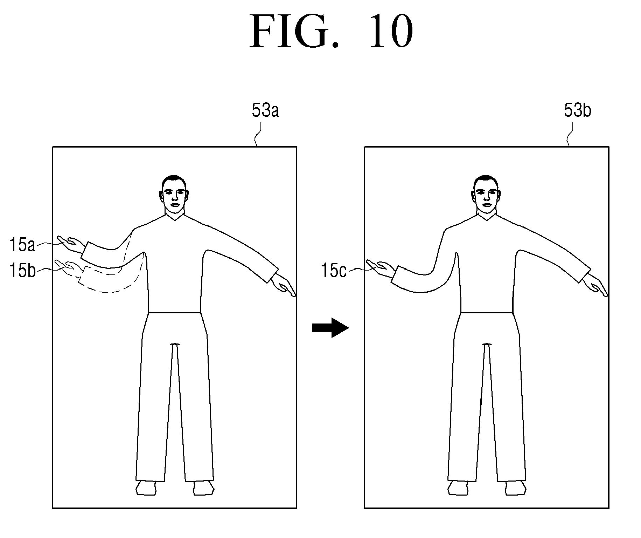

FIG. 10 is a view for explaining information for dance action correction according to an exemplary embodiment.

FIG. 10 illustrates a process through which a user shape in a dance video changes into a dancer shape in the dance data. According to an exemplary embodiment, the information for the dance action correction may be that a dance action of the user image changes into a dance action of the dancer image. In a dance video 53a including a dance action of the user, the right arm 15a of the user is placed at a higher place in excess of a pre-set difference value than the right arm 15b of the dancer. The right arm 15b of the dancer illustrated in a dotted line may be displayed or not be displayed on a display unit.

A video in which the right arm 15a of the user is changed to a position of the right arm 15b of the dancer may be generated by a method of mapping a skeleton and a skeleton depth of the user image and a skeleton and a skeleton depth of the dancer image. In other words, a frame 53b of the dancer action of the user that agrees with or corresponds to the dance action of the dancer may be generated.

3D shape information may be extracted by using the skeleton depth. Therefore, mapping of a natural user image texture may be performed. Detailed extracting processes of the skeleton and the skeleton depth, and a detailed mapping process were described previously in detail. Therefore, descriptions thereof will be omitted.

In other words, the information for the dance action correction may be generated when a difference between the dance action of the user and the dance action of the dancer exceeds the pre-set difference value, and may be a video or information in which a user shape changes into a dancer shape.

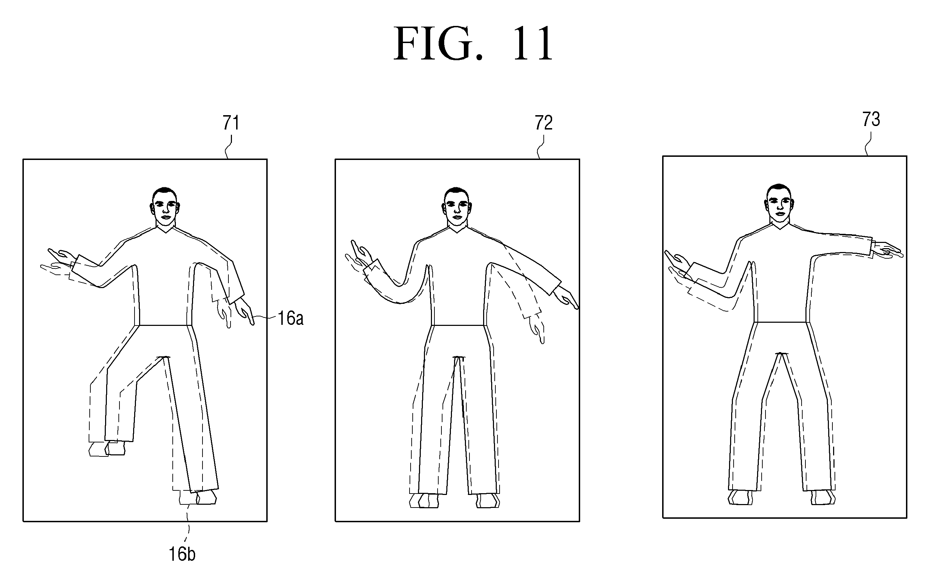

FIG. 11 is a view for explaining information for dance action correction according to another exemplary embodiment.

FIG. 11 illustrates a plurality of frames 71, 72, and 73 in which a user shape 16a and a dancer shape 16b are overlapped. A difference between a user's dance action and a dancer's dance action may occur not only in a single action, but also in actions of a certain section of the dance. Accordingly, the information for the dance action correction may be generated as continuous action frames of the certain section.

As illustrated in FIG. 11, for a section in which the difference between the user's dance action and the dancer's dance action occurs, a plurality of frames in which the user shape 16a and the dancer shape 16b are overlapped are generated. The plurality of generated frames may be displayed in a slow motion, or may be displayed as separate actions. Also, the plurality of generated frames may be play backed repeatedly. Speed of screen playback, a frame replacing time of the separate actions, or a repeating number of playing may be set by the user.

In other words, the information for the dance action correction may be a stopped overlapping video, an overlapping video of a slow motion, an overlapping video of separate actions, or an overlapping video which may be play backed in section repeat, in which the user's dance action and the dancer's dance action are overlapped.

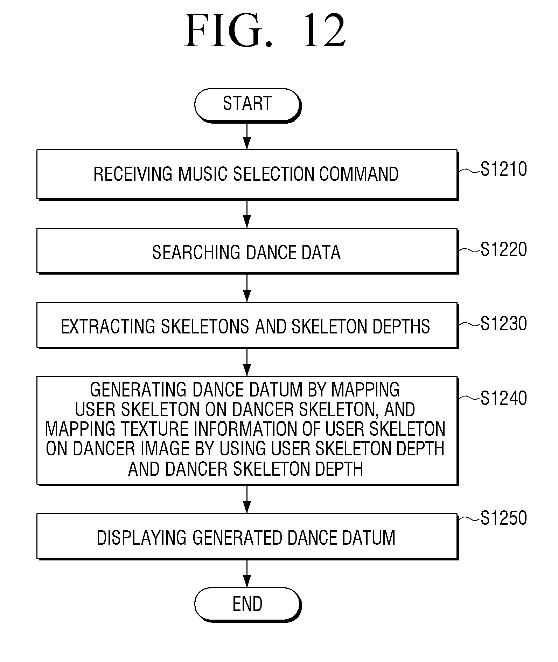

FIG. 12 is a flowchart for explaining a display method of a dance video replaced with a user image.

Referring to FIG. 12, a display device receives a music selection command (S1210). The display device may receive search terms or search data related to the music from a user or the outside, and then may search for itself or request a search to a server apparatus. A search result may be displayed, and the user may select the music from the search result.

The display device searches dance data (S1220). The display device searches for dance data related to the selected music. The display device may search the dance data in a storage unit, and may request a search from the server apparatus. A search result may be a plurality of dance data including similar dance data. The user may select dance data from the search result.

The display device extracts skeletons and skeleton depths (S1230). The display device extracts user skeletons and user skeleton depths from stored user images. Also, the display device extracts dancer skeletons and dancer skeleton depths from dancer images of the searched dance data.

The display device maps the user skeleton on the dancer skeleton, and then generates dance data by mapping texture information of the user skeleton on the dancer image by using the user skeleton depth and the dancer skeleton depth (S1240). Detailed extracting process and generating process were described previously; therefore, descriptions thereof will be omitted. The display device displays the generated dance data (S1250).

Accordingly, the display device may generate and display the dance datum replaced with user images.

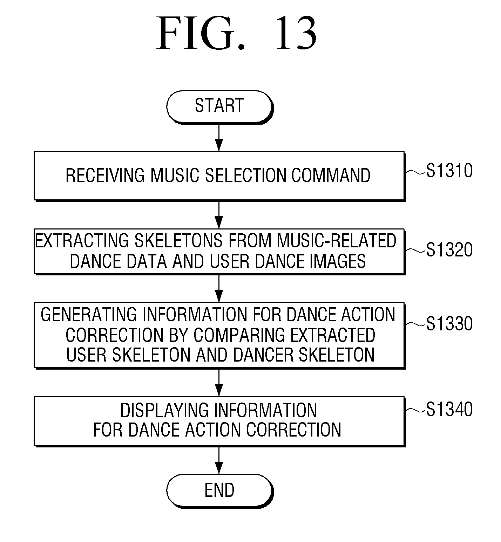

FIG. 13 is a flowchart illustrating a dance video display method of displaying information for dance action correction according to an exemplary embodiment.

The display device receives a music selection command (S1310). The display device extracts skeletons from music-related dance data and a user dance video (S1320). The display device searches for dance data related to the selected music. The display device extracts dancer skeletons from dancer images of the searched dance data.

A user may generate a dance video of the user who copies actions of a dancer contained in the dance data, and store or transmit the dance video in the display device. The display device extracts user skeletons from user images within the generated dance video. The skeleton may be extracted separately from each of the frames. Alternatively, a skeleton may be extracted from a single frame, and then changes of feature points may be grasped and applied to obtain skeletons of the other frames.

The display device generates information for dance action correction by comparing the extracted user skeletons and dancer skeletons (S1330). The information for dance action correction may be generated when a difference between the dance action of the user dance video and the dance data at the same time while playing music exceeds a pre-set difference value.

The display device displays the information for dance action correction (S1340).

The user can easily correct the user's dance action by using the information for dance action correction.

A dance video display method of a display device according to varieties of exemplary embodiments as described above may be implemented as a program, and thus may be provided to the display device.

As an exemplary embodiment, a non-transitory computer readable medium in which a program performing a step of receiving a music selection command, a step of searching dance data related to a piece of music selected by the music selection command, a step of extracting user skeletons and user skeleton depths from stored user images and extracting dancer skeletons and dancer skeleton depths from dancer images within the searched dance data, a step of generating a dance datum including dancer images replaced with the user images by mapping the user skeletons on the dancer skeletons and mapping texture information of the user skeletons on the dancer images by using the user skeleton depth and dancer skeleton depth, and a step of displaying the generated dance datum is stored may be provided.

Contrary to a medium to store data for a short moment, such as a register, a cache, a memory, etc., the non-transitory computer-readable medium refers to a medium that can store data in a semi-permanent manner and that can be read by devices. For example, the above-described various applications or programs may be stored in and provided with the non-transitory computer readable medium such as a compact disc (CD), a digital versatile disc (DVD), a hard disc, a Blu-ray disc, a universal serial bus (USB), a memory card, a ROM, etc.

While the exemplary embodiments have been described, additional variations and modifications of the embodiments may occur to those skilled in the art once they learn of the basic inventive concepts. For example, although the above embodiments are described with respect to music and dance, the inventive concepts are not limited only to music and dance. The inventive concepts may apply to other contents and actions with respect to various sports such as golf, martial arts, swimming, baseball, etc.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims and drawings), and/or all of the steps of any method or process so disclosed, may be combined in any combination, except combinations where at least some of such features and/or steps are mutually exclusive.

Each feature disclosed in this specification (including any accompanying claims and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims and drawings), or to any novel one, or any novel combination, of the steps of any method or process so disclosed.

## Claims

1. A display device comprising:
an input unit configured to receive a content selection command;
a storage unit configured to store an image of a user;
a controller configured to extract skeleton information of the user from the user image, search for data of an action of an actor related to a content selected by the content selection command, and extract skeleton information of the actor from an image of the actor included in the searched action data; and
a display unit,
wherein the controller is further configured to generate new action data including the actor image replaced with the user image by mapping the user skeleton information on the actor skeleton information, and control the display unit to display the new action data.

2. The display device of claim 1,
wherein the skeleton information comprises at least one feature point, at least one skeleton depth and texture information.

3. The display device of claim 1 or 2,
wherein each of the user skeleton information and the actor skeleton information comprises at least one feature point, and
wherein the controller is further configured to map the feature point in the user image and the feature point in the actor image to generate the new action data.

4. The display device in any one of claims 1 to 3, further comprising:
a communication unit configured to receive at least one of the selected content and the searched action data related to the selected content from a server apparatus.

5. The display device in any one of claims 1 to 4,
wherein the storage unit is further configured to store an action video of the user corresponding to the action of the actor included in the searched action data,
wherein the controller is further configured to extract the user skeleton information from the user image in the action video, extract the actor skeleton information from the actor image in the searched action data, and generate information for correcting an action of the user in the action video by comparing the user skeleton information and the actor skeleton information, and
wherein the display unit is further configured to display the information for correcting the action of the user.

6. The display device of claim 5,
wherein the information for correcting the action of the user is generated if a difference between an action of the user in the action video and the action of the actor in the action data exceeds a pre-set difference value.

7. The display device of claim 6,
wherein the controller is further configured to map a user skeleton, included in the user skeleton information, on an actor skeleton included in the actor skeleton information,
wherein the controller is further configured to extract a user skeleton depth, included in the user skeleton information, from the user image in the action video, extract an actor skeleton depth, included in the actor skeleton information, from an action image in the searched action data, and map texture information of the user skeleton on the actor image by using the user skeleton depth and the actor skeleton depth, and
wherein the information for correcting the action of the user is a video in which an image of the action of the user changes into an image of the action of the actor.

8. The display device of claim 6 or 7,
wherein the information for correcting the action of the user comprises an overlapping video of a slow motion, an overlapping video of separate actions, and a stopped overlapping video, in which an image of the action of the user and an image of the action of the actor are overlapped.

9. The display device in anyone of claims 6 to 8,
wherein the information for correcting the action of the user comprises a video which repeatedly playbacks an interval in which the difference exists between the action of the user in the action video and the corresponding action in the searched action data.

10. The display device in anyone of claims 5 to 9,
wherein the skeleton information comprises at least one feature point, at least one skeleton depth and texture information.

11. A server apparatus comprising:
a server communication unit configured to receive content information from a display device; and
a server controller configured to search action data related to the received content information,
wherein the server controller is further configured extract actor skeleton information from an actor image in the searched action data, and control the server communication unit to transmit the actor skeleton information to the display device.

12. An action video display method comprising:
receiving a content selection command;
searching for data of an action of an actor related to a content selected by the content selection command;
extracting skeleton information of the user from an image of a user and skeleton information of the actor from an image of the actor included in the searched action data;
generating new action data including the actor image replaced with the user image by mapping the user skeleton information on the actor skeleton information; and
displaying the new action data.

13. The action video display method of claim 12,
wherein the skeleton information comprises at least one feature point, at least one skeleton depth and texture information.

14. The action video display method of claim 12 or 13,
wherein each of the user skeleton information and the actor skeleton information comprises at least one feature point, and
wherein the generating the action data comprises mapping the feature point in the user image and the feature point in the actor image to generate the new action data.

15. The action video display method in anyone of claims 12 to 14, further comprising:
receiving at least one of the selected content and the searched action data related to the selected content from a server apparatus.
